# EUROPÄISCHE PATENTSCHRIFT

(11) **EP 1 995 187 B1**
(45) Veröffentlichungstag und Bekanntmachung des Hinweises auf die Patenterteilung: **06.12.2017**
(21) Anmeldenummer: 08006129.4
(22) Anmeldetag: 28.03.2008
(51) Int. Cl.: B65G 1/04, B65G 1/137

(54) **Kommissioniermodul**
Commissioning module
Module de commissionnement

(30) Priorität: 21.05.2007 DE 102007023589
(43) Veröffentlichungstag der Anmeldung: 26.11.2008
(73) Patentinhaber: TWI GmbH, 76189 Karlsruhe (DE)
(72) Erfinder: Eberhard, Hans-Joachim, Dipl.-Ing., 76287 Rheinstetten (DE); Buck, Nils, Dipl.-Ing., 76307 Karlsbad (DE)
(74) Vertreter: Happe, Otto

(56) Entgegenhaltungen:
- EP-A- 0 847 939
- DE-U1- 20 116 721
- JP-A- 10 279 023
- US-A1- 2003 044 262
- US-A1- 2003 135 300

## Beschreibung

Die Erfindung betrifft ein Verfahren für die Kommissionierung unterschiedlicher Artikel, die für unterschiedliche Empfänger bestimmt sind, mittels eines aus mehreren Regalen bestehendes Kommissioniermoduls. Unter Kommissionierung versteht man das Zusammenstellen von bestimmten Artikeln aus einer bereitgestellten Gesamtmenge aufgrund eines Auftrags (Kundenauftrag oder Produktionsauftrag). Die Kommissionierung kann automatisch, halbautomatisch oder manuell durchgeführt werden. Die vorliegende Erfindung bezieht sich auf die halbautomatische Kommissionierung, d. h. es werden auch noch Kommissionierer benötigt.

Bei einem bekannten Fördersystem (DE 102 06 837 A1) sind zwei nebeneinander angeordnete mit Fächern versehene Regale vorhanden, von denen eines als so genannter drehbarer Regalturm mit radial positionierten Fächern ausgebildet ist. Hierdurch sollen eine vergrößerte Speicherkapazität und kompakte Abmessungen der gesamten Einheit angestrebt werden. Ferner sind zwischen den beiden Regalen eine Übergabeeinrichtung und weitere Bauteile angeordnet, ohne die die in der DE 102 06 837 A1 beschriebene Vorrichtung nicht funktionieren würde.

Eine bekannte Lagereinheit (US 2005/0098626 A1) ist für die Lagerung bestimmter Artikel bestimmt. Zur Sortierung (Zusammenstellung) von Artikeln nach Art und Menge und zur Verteilung der Artikel an bestimmte, aber unterschiedliche Kunden, ist der Gegenstand dieser Druckschrift nicht geeignet.

Es ist ein Verfahren zum Kommissionieren unterschiedlicher Artikel, die für unterschiedliche Empfänger bestimmt sind, mittels eines Kommissioniermoduls, bekannt (EP 0 847 939 A1): das Kommissioniermodul besteht aus einem mit Fächern versehenen Artikelregal, wobei das Artikelregal mehrere Fächer und eine entsprechende Anzahl Displays aufweist, wobei die jeweils zu kommissionierenden Mengen der einzelnen Artikel für ein bestimmtes Fach des Fächerregals an den Displays des Artikelregals angezeigt werden und der Kommissionierer die Artikel aus dem Fach des Artikelregals entnimmt und ein Kundenauftragsbehälter mit den Artikeln befüllt. Als Voraussetzung des Verfahrens genannt ist die Bereitstellung der Ware (Artikel) in Ladungsträgern, die zur Aufnahme derselben dienen, wobei vorzugsweise Behälter genannt sind. Bereits im Hauptanspruch ist von einem Behälterlager die Rede. Dies trifft auf das Verfahren nach der oben genannten Patentanmeldung nicht zu. Das bei dem Verfahren nach der oben genannten Patentanmeldung verwendete Kommissioniermodul kann, muss jedoch nicht, mit Behältern betrieben werden.

Der Erfindung liegt die Aufgabe zu Grunde, ein Verfahren für die Kommissionierung unterschiedlicher Artikel mittels eines Kommissioniermoduls zu schaffen, wodurch die Kommissionierung von Artikeln, also die Zuordnung bestimmter Artikel zu bestimmten Kunden, wesentlich vereinfacht wird und gewährleistet ist, dass fehlerhafte Zuordnungen nicht auftreten können.

Die Lösung der gestellten Aufgabe besteht in einem Verfahren für die Kommissionierung unterschiedlicher Artikel, die für unterschiedliche Empfänger bestimmt sind, mittels eines Kommissioniermoduls, das aus zwei nebeneinander angeordnete, mit Fächern versehenen Regalen, einem Fächerregal und einem Artikelregal besteht, wobei das Fächerregal von oben gesehen rund ausgebildet und um seine senkrechte Mittelachse drehbar angeordnet ist und die Fächer des Fächerregals jeweils radial um die Mittelachse des Fächerregals nebeneinander angeordnet sind und wobei das Artikelregal mehrere Fächer und eine entsprechende Anzahl Displays aufweist, wobei die jeweils zu kommissionierenden Mengen der einzelnen Artikeln für ein bestimmtes Fach des Fächerregals an den Displays des Artikelregals angezeigt werden und der Kommissionierer die Artikel aus dem Fach des Artikelregals entnimmt und das bestimmte Fach des Fächerregals mit den Artikeln befüllt.

Mittels des bei der Durchführung des erfindungsgemäßen Verfahren zur Verwendung kommenden Kommissioniermoduls wird ermöglicht, mehrere Artikel gleichzeitig zu kommissionieren, während bekannte Einrichtungen nur jeweils die Kommissionierung eines einzigen Artikels ermöglichen.

Das bei der Durchführung des erfindungsgemäßen Verfahren zur Verwendung kommende Kommissioniermodul ermöglicht daher eine wesentlich höhere Kommissionierleistung als sie mit den bekannten Einrichtungen erzielt werden kann.

Dadurch, dass das Artikelregal mehrere Fächer und eine entsprechende Anzahl Displays aufweist, ergibt sich der Vorteil, dass die jeweils zu kommissionierenden Mengen der einzelnen Artikel für ein bestimmtes Fach an den Displays angezeigt werden.

Zweckmäßigerweise weist das Artikelregal sechzehn Fächer und sechzehn Displays auf.

In Ausgestaltung der Erfindung weist das Fächerregal mehrere übereinander angeordnete Ebenen mit mehreren jeweils radial um die Mittelachse des Fächerregals nebeneinander angeordneten Fächern auf, wobei nach einem weiteren Merkmal der Erfindung das Fächerregal sechs übereinander angeordnete Ebenen mit zehn jeweils radial um die Mittelachse des Fächerregals nebeneinander angeordneten Fächern aufweist. Dadurch ergeben sich während der Kommissionierung kürzere Wege gegenüber einem konventionellen fest installierten Regalsystem.

In weiterer Ausgestaltung der Erfindung erfolgt die Drehung des Fächerregals jeweils in Teilschritten, wobei die Größe der Teilschritte einer Fächerteilung entspricht. Dadurch werden die während der Kommissionierung erforderlichen Wege weiter verkürzt, so dass fast gar keine Wege mehr zurück zu legen sind. Die Größe der Teilschritte wird nach der Formel "360°/Anzahl der Fächer" bestimmt.

Eine weitere Verbesserung des bei der Durchführung des erfindungsgemäßen Verfahrens zur Verwendung kommenden Kommissioniermoduls besteht darin, dass neben dem Artikelregal eine Leiste mit Quittierungstastern angeordnet ist, wobei die Anzahl der Quittierungstaster der Anzahl der Ebenen des Fächerregals entspricht, zweckmäßigerweise eine Leiste mit sechs Quittierungstastern, wobei nach einem weiteren Merkmal der Erfindung die Quittierungstaster jeweils mit einer Lichtanzeige oder mit einer andersartigen Anzeige versehen sind. An dem zu befüllenden Fach des Fächerregals leuchtet der Quittierungstaster. Wenn das Fach gefüllt ist, quittiert der Kommissionierer diesen Auftrag und die Mengen für den nächsten Auftrag werden an den Artikeldisplays angezeigt. Sind alle Fächer der betreffen-den Spalte fertig bearbeitet, dreht sich das Fächerregal automatisch weiter bis zur nächsten Spalte, in der mindestens ein Fach bearbeitet wird. Mit der Bezeichnung "Spalte" sind die übereinander angeordneten Fächer des Fächerregals gemeint. Nach einer vollständigen Umdrehung des Fächerregals sind alle Artikel aus dem Artikelregal kommissioniert. Das Artikelregal wird dann mit neuen bzw. weiteren Artikeln bestückt und ein neuer Umlauf des Fächerregals beginnt. Am Ende der Kommissionierung werden die Fächer des Fächerregals durch entsprechende Anzeige der Quittierungstaster leergeräumt und dabei die Lieferdokumente des betreffenden Teilauftrags erstellt.

Abweichend von der vorstehend beschriebenen Kommissionierung können beispielsweise einzelne Artikel nicht erst nach einem Kommissionsumlauf, sondern bereits bei Leerwerden eines Artikelfachs diesem Artikelfach zugeordnet werden. Dadurch ergibt sich der Vorteil, dass die Kommissionierung nicht fix an eine vollständige Umdrehung des Fächerregals gebunden ist, sondern der Übergang der Einzelaufträge fließend erfolgen kann. Das Gleiche gilt auch für das Leerräumen der Fächer und Abschließen des Einzelauftrags.

Durch die andersfarbige Anzeige der an den Quittungstastern vorgesehenen Lichtanzeige bzw. der andersartigen Anzeige wird dem Kommissionierer während der Kommissionierung angezeigt, dass das betreffende Fach leergeräumt werden muss. Dieses Fach steht dann für die weitere Kommissionierung wieder zur Verfügung. Bei der Kommissionierung bestimmter Artikel kann die Tiefe der Fächer des Artikelregals mehrfach genutzt werden.

Ein wesentlicher Vorteil des bei der Durchführung des erfindungsgemäßen Verfahrens zur Verwendung kommenden Kommissioniermoduls besteht darin, dass nicht der Kommissionierer an den Regalen entlang laufen muss, sondern das Fächerregal läuft automatisch an dem Kommissionierer vorüber. Ferner können die Artikel und gegebenenfalls fertige Pakete von Artikeln während des Kommissioniervorgangs "fließend" entnommen und frei gewordene Fächer sofort wieder benutzt werden können.

Ein weiterer erheblicher Vorteil des bei dem erfindungsgemäßen Verfahrtens zur Verwendung kommenden Kommissioniermoduls besteht darin, dass nur ein einziger Kommissionierer für die Bedienung erforderlich ist.

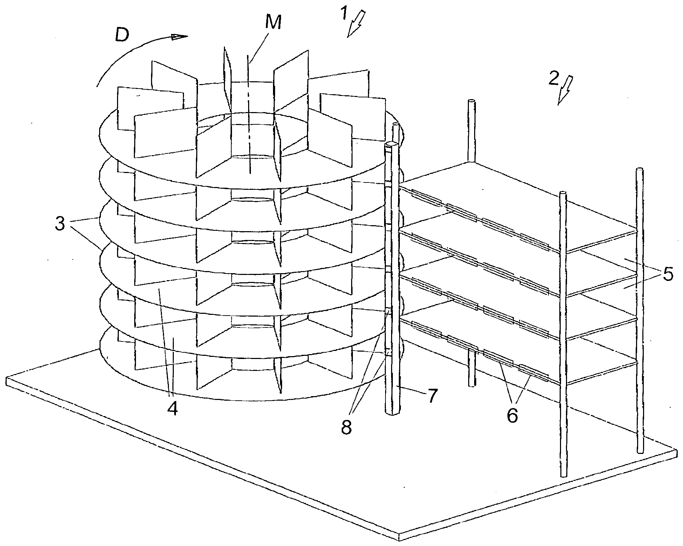

Die Zeichnung zeigt ein Ausführungsbeispiel des bei der Durchführung des erfindungsgemäßen Verfahrens zur Verwendung kommenden Kommissioniermoduls in einer 3-D-Darstellung.

Das Kommissioniermodul besteht im Wesentlichen aus einem von oben gesehen runden Fächerregal 1 und einem Artikelregal 2 in üblicher Bauart.

Das Fächerregal 1 ist um seine Mittelachse M drehbar ausgebildet und bewegt sich in der Drehrichtung D. Die Mittelachse M des Fächerregals 1 ist durch eine strichpunktierte Linie angedeutet. Das Fächerregal 1 weist sechs übereinander angeordnete Ebenen 3 mit zehn jeweils radial um die Mittelachse M des Fächerregals 1 angeordneten Fächern 4 auf.

Das Artikelregal 2 weist sechzehn Fächer 5 und sechzehn Displays 6 auf. Neben dem Artikelregal 2 ist eine Leiste 7 mit sechs Quittierungstastern 8 angeordnet, die mit einer Lichtanzeige versehen sind.

## Patentansprüche

1. Verfahren für die Kommissionierung unterschiedlicher Artikel, die für unterschiedliche Empfänger bestimmt sind, mittels eines Kommissioniermoduls, das aus zwei nebeneinander angeordnete, mit Fächern versehenen Regalen, einem Fächerregal (1) und einem Artikelregal (2) besteht, wobei das Fächerregal (1) von oben gesehen rund ausgebildet und um seine senkrechte Mittelachse (M) drehbar angeordnet ist und die Fächer (4) des Fächerregals (1) jeweils radial um die Mittelachse (M) des Fächerregals (1) nebeneinander angeordnet sind und wobei das Artikelregal (2) mehrere Fächer (5) und eine entsprechende Anzahl Displays (6) aufweist, wobei die jeweils zu kommissionierenden Mengen der einzelnen Artikel für ein bestimmtes Fach (4) des Fächerregals (1) an den Displays (6) des Artikelregals (2) angezeigt werden und der Kommissionierer die Artikel aus dem Fach (5) des Artikelregals (2) entnimmt und das bestimmte Fach (4) des Fächerregals (1) mit den Artikeln befüllt.

2. Verfahren für die Kommissionierung unterschiedlicher Artikel nach Anspruch 1, **dadurch gekennzeichnet, dass** das Artikelregal (2) sechzehn Fächer (5) und sechzehn Displays (6) aufweist.

3. Verfahren für die Kommissionierung unterschiedlicher Artikel nach Anspruch 1, **dadurch gekennzeichnet, dass** das Fächerregal (1) mehrere übereinander angeordnete Ebenen (3) mit mehreren jeweils radial um die Mittelachse (M) des Fächerregals (1) nebeneinander angeordneten Fächern (4) aufweist.

4. Verfahren für die Kommissionierung unterschiedlicher Artikel nach Anspruch 3, **dadurch gekennzeichnet, dass** das Fächerregal (1) sechs übereinander angeordnete Ebenen (3) mit zehn eweils radial um die Mittelachse (M) des Fächerregals (1) nebeneinander angeordneten Fächern (4) aufweist.

5. Verfahren für die Kommissionierung unterschiedlicher Artikel nach einem der Ansprüche 2 bis 4, **dadurch gekennzeichnet, dass** die Drehung des Fächerregals (1) jeweils in Teilschritten erfolgt, wobei die Größe der Teilschritte einer Fächerteilung entspricht.

6. Verfahren für die Kommissionierung unterschiedlicher Artikel nach einem der Ansprüche 2 bis 5, **dadurch gekennzeichnet, dass** neben dem Fächerregal (1) eine Leiste (7) mit Quittierungstastern (8) angeordnet ist, wobei die Anzahl der Quittierungstaster (8) der Anzahl der Ebenen (3) des Fächerregals (1) entspricht.

7. Verfahren für die Kommissionierung unterschiedlicher Artikel nach Anspruch 6, **dadurch gekennzeichnet, dass** neben dem Fächerregal (1) eine Leiste (7) mit sechs Quittierungstastern (8) ngeordnet ist.

8. Verfahren für die Kommissionierung unterschiedlicher Artikel nach Anspruch 6 oder 7, **dadurch gekennzeichnet, dass** die Quittierungstaster (8) jeweils mit einer Lichtanzeige oder mit einer andersartigen Anzeige versehen sind.

## Claims

1. Method for order-picking of different articles intended for different purchasers, by means of an order-picking module consisting of two racks arranged adjacent to one another and provided with compartments, namely a compartment rack (1) and an article rack (2), wherein the compartment rack (1) is constructed to be round as seen from above and is arranged to be rotatable about its vertical centre axis (M) and the compartments (4) of the compartment rack (1) are arranged adjacent to one another respectively radially around the centre axis (M) of the compartment rack (1) and wherein the article rack (2) has a plurality of compartments (5) and a corresponding number of displays (6), wherein the respective quantities of individual articles to be picked are indicated for an intended compartment (4) of the compartment rack (1) at the displays (6) of the article rack (2) and the picker removes the articles from the compartment (5) of the article rack (2) and fills the intended compartment (4) of the compartment rack (1) with the articles.

2. Method for order-picking of different articles according to claim 1, **characterised in that** the article rack (2) has a sixteen compartments (5) and sixteen displays (6).

3. Method for order-picking of different articles according to claim 1, **characterised in that** the compartment rack (1) has a plurality of levels (3), which are arranged one above the other, with a plurality of compartments (4) arranged adjacent to one another respectively radially around the centre axis (M) of the compartment rack (1).

4. Method for order-picking of different articles according to claim 3, **characterised in that** the compartment rack (1) has six levels (3), which are arranged one above the other, with ten compartments (4) arranged adjacent to one another respectively radially around the centre axis (M) of the compartment rack (1).

5. Method for order-picking of different articles according to any one of claims 2 to 4, **characterised in that** the rotation of the compartment rack (1) is carried in respective sub-steps, the size of the sub-steps corresponding with a compartment pitch.

6. Method for order-picking of different articles according to any one of claims 2 to 5, **characterised in that** a strip (7) with acknowledgement buttons (8) is arranged near the compartment rack (1), wherein the number of acknowledgement buttons (8) corresponds with the number of levels (3) of the compartment rack (1).

7. Method for order-picking of different articles according to claim 6, **characterised in that** a strip (7) with six acknowledgement buttons (8) is arranged adjacent to the compartment rack (1).

8. Method for order-picking of different articles according to claim 6 or 7, **characterised in that** the acknowledgement buttons (8) are respectively provided with a light indication or another form of indication.

## Revendications

1. Procédé de préparation de commandes de différents articles, qui sont destinés à différents destinataires, au moyen d'un module de préparation de commandes, qui est composé de deux rayonnages qui, disposés l'un à côté de l'autre, sont pourvus de compartiments, un rayonnage de compartiments (1) et un rayonnage d'articles (2), sachant que le rayonnage de compartiments (1), vu d'en haut, présente une forme arrondie et est monté en rotation autour de son axe central vertical (M) et que les compartiments (4) du rayonnage de compartiments (1) sont disposés les uns à côté des autres, radialement par rapport à l'axe central (M) du rayonnage de compartiments (1), et sachant que le rayonnage d'articles (2) est doté de plusieurs compartiments (5) et d'un nombre correspondant de displays (6), les quantités d'articles d'un compartiment (4) déterminé du rayonnage de compartiments (1), faisant l'objet d'une commande à préparer, étant affichées sur les displays (6) du rayonnage d'articles (2), et sachant que le préparateur de commandes prélève les articles du compartiment (5) du rayonnage d'articles (2) et remplit le compartiment (4) déterminé du rayonnage de compartiments (1) avec lesdits articles.

2. Procédé de préparation de commandes de différents articles selon la revendication 1,
**caractérisé en ce que** le rayonnage d'articles (2) est doté de seize compartiments (5) et de seize displays (6).

3. Procédé de préparation de commandes de différents articles selon la revendication 1,
**caractérisé en ce que** le rayonnage de compartiments (1) est doté de plusieurs plans (3), disposés les uns au-dessus des autres, comprenant plusieurs compartiments (4), qui sont respectivement disposés les uns à côté des autres, radialement par rapport à l'axe central (M) du rayonnage de compartiments (1).

4. Procédé de préparation de commandes de différents articles selon la revendication 3,
**caractérisé en ce que** le rayonnage de compartiments (1) est doté de six plans (3), disposés les uns au-dessus des autres, avec dix compartiments (4), respectivement disposés les uns à côté des autres, radialement par rapport à l'axe central (M) du rayonnage de compartiments (1).

5. Procédé de préparation de commandes de différents articles selon l'une des revendications 2 à 4,
**caractérisé en ce que** la rotation du rayonnage de compartiments (1) s'effectue chaque fois en étapes partielles, sachant que la grandeur des étapes partielles correspond à une division de compartiments.

6. Procédé de préparation de commandes de différents articles selon l'une des revendications 2 à 5,
**caractérisé en ce que,** à côté du rayonnage de compartiments (1), est disposée une bande d'acquittement (7) dotée de touches d'acquittement (8), sachant que le nombre des touches d'acquittement (8) correspond au nombre des plans (3) du régal de compartiments (1).

7. Procédé de préparation de commandes de différents articles selon la revendication 6,
**caractérisé en ce que,** à côté du rayonnage de compartiments (1), est disposée une bande d'acquittement (7) dotée de six touches d'acquittement (8).

8. Procédé de préparation de commandes de différents articles selon revendication 6 ou 7,
**caractérisé en ce que** les touches d'acquittement (8) sont pourvues chacune d'un affichage lumineux ou d'un affichage d'un autre genre.
